# EUROPEAN PATENT SPECIFICATION

(11) **EP 4 484 214 B1**
(45) Date of publication and mention of the grant of the patent: **08.04.2026**
(21) Application number: 23835725.5
(22) Date of filing: 23.06.2023
(51) Int. Cl.: B60L 58/18, B60L 58/12, B60R 16/023, H04W 84/20, H04Q 9/00

(54) **WIRELESS COMMUNICATION METHOD AND BATTERY SYSTEM PROVIDING THE SAME**
DRAHTLOSKOMMUNIKATIONSVERFAHREN UND BATTERIESYSTEM ZUR BEREITSTELLUNG DES VERFAHRENS
PROCÉDÉ DE COMMUNICATION SANS FIL ET SYSTÈME DE BATTERIE POUR APPLIQUER UN PROCÉDÉ

(30) Priority: 07.07.2022 KR 20220083730
(43) Date of publication of application: 01.01.2025
(73) Proprietor: LG Energy Solution, Ltd., Seoul 07335 (KR)
(72) Inventor: YU, Jae Wook, Daejeon 34122 (KR)
(74) Representative: Plasseraud IP
(86) International application number: PCT/KR2023/008790
(87) International publication number: WO 2024/010258

(56) References cited:
- KR-A- 20140 073 949
- KR-A- 20210 128 338
- KR-A- 20210 137 640
- KR-B1- 102 312 942
- US-A1- 2019 123 404
- US-A1- 2020 144 679

## Description

### CROSS-REFERENCE TO RELATED APPLICATION

This application claims priority to and the benefit of Korean Patent Application No. 10-2022-0083730 filed in the Korean Intellectual Property Office on July 07, 2022.

### TECHNICAL FIELD

The present disclosure relates to a wireless communication method between a plurality of battery management systems (BMSs) and a battery system providing the same.

### [Background]

A battery system applied to an electric vehicle or the like may include a plurality of battery packs, each including a battery module and a slave battery management system (BMS) managing the battery module. In addition, the battery system may further include a master battery management system (BMS) communicating with a vehicle system and managing the plurality of battery packs.

Recently, in order to solve the problems of poor quality of electric wiring and frequent maintenance related to wire cables and connectors, and to increase a mileage by reducing a weight of an electric vehicle, research and development on a method for wireless communication between a master BMS and a plurality of slave BMSs are increasing. Prior art document US2019/123404 A1 discloses a BMS whereby wireless communications is used for communicating data between the slave BMS and the master BMS.

### [Summary]

### [Technical Problem]

The present disclosure attempts to provide a wireless communication method capable of wireless communication between a plurality of battery management systems (BMSs) without adding a separate component for wireless communication, and a battery system providing the same.

Further, the present disclosure attempts to provide a wireless communication method capable of wireless communication between a plurality of battery management systems (BMS) in various industrial scientific and medical (ISM) bands, and a battery system providing the same.

### [Technical Solution]

An exemplary embodiment of the present disclosure provides a battery system including at least one battery pack including a battery module and a slave battery management system (BMS) managing the battery module includes: a communication unit of the slave BMS; a capacitor connected between the communication unit and a first ground; an inductor connected between a contact between the first ground and the capacitor and a second ground; and a controller configured to transmit an AC signal having a predetermined frequency to the communication unit in an antenna mode, wherein in the antenna mode, the slave BMS is configured to communicate with the outside.

The inductor may be located between the battery module and the slave BMS.

A length between the inductor and the first ground may correspond to 1/4 of a wavelength of the AC signal.

The first ground may be a signal ground of the slave BMS, and the second ground may be a chassis ground of the battery module.

The battery system may further include a monitoring unit electrically connected to each of a plurality of battery cells included in the battery module to collect battery data including at least one of a current, a voltage, and a temperature for each of the plurality of battery cells.

In a monitoring mode in which the monitoring unit collects the battery data, the control unit may transmit a DC signal to the communication unit.

The battery system may further include a master BMS communicating with the communication unit in a wireless manner to manage the at least one slave BMS.

In the antenna mode, the controller may be further configured to transmit the collected battery data to the master BMS through the communication unit.

Another exemplary embodiment of the present disclosure provides a wireless communication method in a battery system including a communication unit of a slave battery management system (BMS) managing a battery module, a capacitor connected between the communication unit and a first ground, and an inductor connected between a contact between the first ground and the capacitor and a second ground, the method includes transmitting an AC signal having a predetermined frequency to the communication unit to configure the slave BMS to communicate with the outside.

The inductor may be located between the battery module and the slave BMS.

A length between the inductor and the first ground may correspond to 1/4 of a wavelength of the AC signal.

The first ground may be a signal ground of the slave BMS, and the second ground may be a chassis ground of the battery module.

The battery system may further include a monitoring unit electrically connected to each of a plurality of battery cells included in the battery module to collect battery data including at least one of a current, a voltage, and a temperature for each of the plurality of battery cells.

The wireless communication method may further include collecting the battery data by the monitoring unit, before the communication with the outside, wherein the collection of the battery data includes transmitting a DC signal to the communication unit.

The communication with the outside may include transmitting the collected battery data to a master BMS managing the slave BMS through the communication unit.

### [Advantageous Effects]

According to the present invention, there is no need to add a component (e.g., an antenna) for wireless communication inside a printed circuit board (PCB) for the BMS, and as a result, the size of the PCB for the BMS can be reduced.

According to the present invention, the cost can be reduced because there is no need to purchase a component (e.g., an antenna) for wireless communication.

According to the present invention, there is no need to change the PCB for the BMS according to a frequency band, and accordingly, a design of the PCB for the BMS can be commonized.

### [Brief Description of the Drawings]

FIG. 1 is a block diagram illustrating a battery system according to an exemplary embodiment.
FIG. 2 is a block diagram illustrating a battery pack of FIG. 1 in detail.
FIG. 3 is a block diagram illustrating the battery pack of FIG. 1 when operating in a monitoring mode in detail.
FIG. 4 is a block diagram illustrating the battery pack of FIG. 1 when operating in an antenna mode in detail.
FIG. 5 is a block diagram illustrating an antenna of FIG. 4 in detail.
FIG. 6 is a flowchart illustrating a wireless communication method according to an exemplary embodiment.

### [Detailed Description]

Hereinafter, exemplary embodiments will be described in detail with reference to the accompanying drawings. The same or similar components will be denoted by the same or similar reference signs, and overlapping descriptions thereof will be omitted. The suffixes "module" and "unit" for components used in the description below are assigned or mixed in consideration of easiness in writing the specification and do not have distinctive meanings or roles by themselves. In addition, in describing exemplary embodiments in the present specification, detailed descriptions of relevant known technologies will be omitted if they unnecessarily obscure the gist of the exemplary embodiments disclosed in the present specification. Further, the accompanying drawings are provided only to help easily understand exemplary embodiments disclosed in the present specification. It should be understood that the technical idea disclosed in the present specification is not limited by the accompanying drawings, and includes all modifications, equivalents, and substitutions within the spirit and the technical scope of the present disclosure.

Terms including ordinal numbers such as first and second may be used to describe various components, but these components are not limited by these terms. These terms are used only for the purpose of distinguishing one component from another component.

It is to be understood that when one component is referred to as being "connected to" or "coupled to" another component, one component may be connected or coupled directly to another component, or one component may be connected or coupled to another component with an intervening component therebetween. On the other hand, it is to be understood that when one component is referred to as being "directly connected to" or "directly coupled to" another component, one component may be connected to another component with no intervening component therebetween.

It should be understood that terms "include", "have", and the like used in the present application specify the presence of features, numerals, steps, operations, components, parts, or combinations thereof mentioned in the specification, but do not preclude the presence or addition of one or more other features, numerals, steps, operations, components, parts, or combinations thereof.

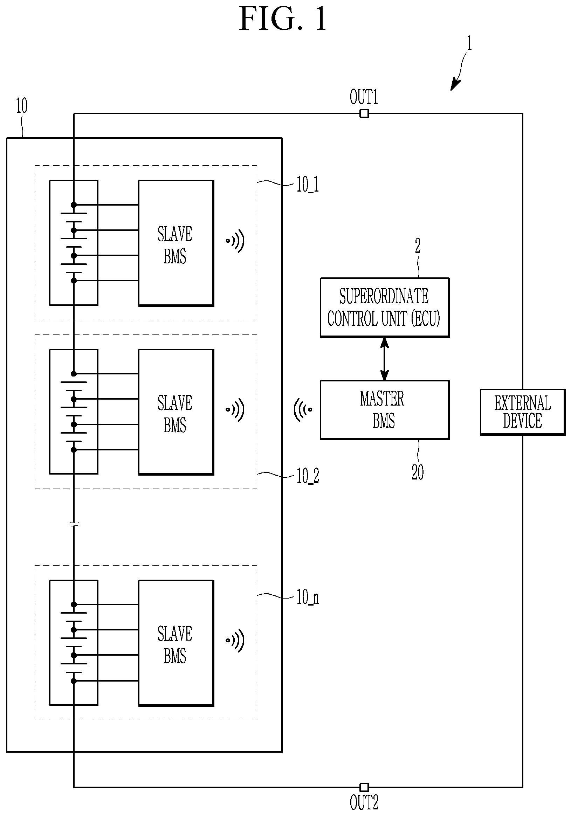

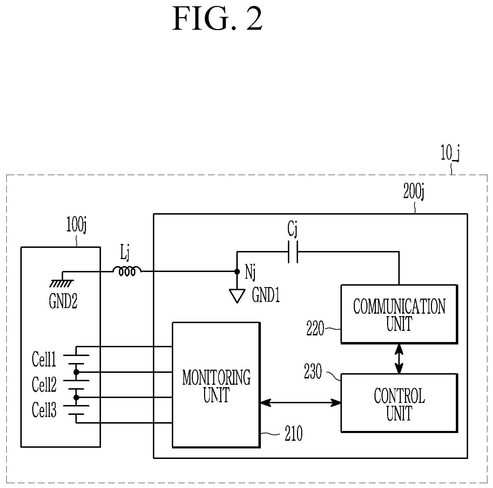

FIG. 1 is a block diagram illustrating a battery system according to an exemplary embodiment. FIG. 2 is a block diagram illustrating a battery pack of FIG. 1 in detail.

Referring to FIG. 1, a battery system 1 includes a battery 10 and a master battery management system (hereinafter referred to as a master BMS) 20.

The battery 10 includes at least one battery pack. In FIG. 1, a plurality of battery packs 10_1 to 10_n are illustrated, but the number of battery packs is not limited thereto, and the battery 10 may include one battery pack 10_1.

Hereinafter, reference sign "10_j" will be used to denote a specific battery pack among the plurality of battery packs 10_1 to 10_n, and reference signs "100j" and "200j" will be used to denote a battery module and a slave BMS included in the battery pack 10_j, respectively. In addition, reference signs "Cj", "Lj", "Nj", and "200_Aj" will be used to denote a capacitor, an inductor, a contact, and an antenna included in the battery pack 10_j, respectively, to be described below.

The battery pack 10_j includes a battery module 100j and a slave BMS 200j.

The battery module 100j may include a plurality of battery cells connected to each other in series and/or in parallel. In some exemplary embodiments, the battery cell may be a rechargeable secondary battery. In FIGS. 1 and 2, it is illustrated that the battery module 100j includes three battery cells Cell1, Cell2, and Cell3 connected to each other in series, but the number of battery cells is not limited thereto. The battery module 100j may include any number of battery cells.

The slave BMS 200j may collect battery data for the battery module 100j and transmit the collected battery data to a master BMS 20 through wireless communication. In this case, the battery data may include at least one of a cell voltage, a cell current, and a cell temperature for each of the plurality of battery cells Cell1, Cell2, and Cell3. In addition, the battery data may include at least one of a module voltage, which is a voltage at both ends of the battery module 100j, and a module current, which is a current flowing through the battery module 100j.

Referring to FIG. 2, the slave BMS 200j may include a monitoring unit 210, a communication unit 220, a control unit 230, a capacitor Cj, and an inductor Lj.

The monitoring unit 210 is electrically connected to the battery module 100j to collect battery data. For example, the monitoring unit 210 is an integrated circuit (IC) capable of collecting battery data, and may include an application specific IC (ASIC), a battery monitoring IC (BMIC), or the like.

Referring to FIG. 2, as an example, the monitoring unit 210 is electrically connected to positive and negative electrodes of each of the plurality of battery cells Cell1, Cell2, and Cell3, and the plurality of battery cells Cell1, Cell2, and Cell3 measure a cell voltage of each of the plurality of battery cells Cell1, Cell2, and Cell3. As another example, the monitoring unit 210 may receive information about a cell current and a cell temperature measured by a current sensor (not shown) and a temperature sensor (not shown), respectively. As another example, the monitoring unit 210 may measure a cell voltage of each of the plurality of battery cells Cell1, Cell2, and Cell3 at every predetermined cycle during a rest period in which charging and discharging does not occur, and calculate a cell current based on the measured cell voltage. The monitoring unit 210 may collect battery data at every predetermined cycle or in real time, and transmit the collected battery data to the control unit 230.

The communication unit 220 may be an analog signal processing device that processes data to be transmitted. For example, the communication unit 220 may include a radio frequency IC (RFIC), but is not limited thereto.

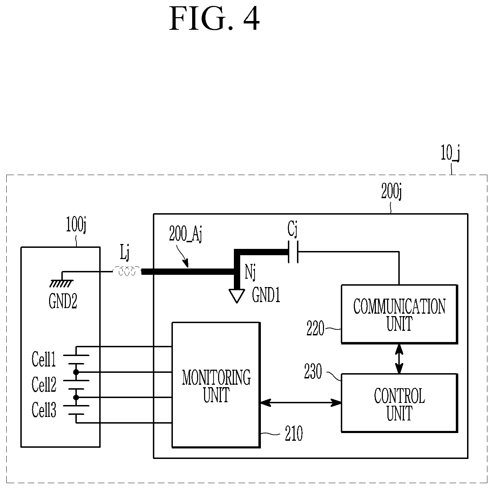

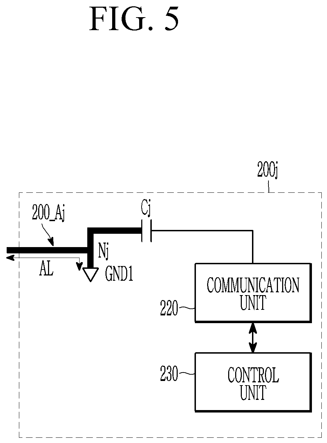

According to an exemplary embodiment, the control unit 230 may convert a digital signal into an analog signal (alternating current signal, AC signal) and transmit the converted signal to the communication unit 220. Then, the communication unit 220 processes the analog signal by amplifying and filtering the analog signal, and transmits the processed analog signal to the antenna. The antenna may convert the processed analog signal into an electromagnetic wave and transmit the electromagnetic wave into the air. According to an exemplary embodiment, the antenna may be an antenna generated in an antenna mode, and the antenna will be described in detail with reference to FIGS. 4 and 5 below.

The control unit 230 may control an overall operation of the slave BMS 200j. For example, the monitoring unit 210 may be controlled to collect battery data, and the communication unit 220 may be controlled to transmit the collected battery data to the master BMS 20.

A capacitor Cj may be connected between the communication unit 220 and a first ground GND1. In this case, the first ground GND1 may be a signal ground located in the slave BMS 200j, but is not limited thereto. For example, the first ground GND1 may be implemented by an earth ground or a chassis ground.

An inductor Lj may be connected between a second ground GND2 and a contact Nj between the first ground GND1 and the capacitor Cj. In this case, the second ground GND2 may be a chassis ground located in the battery module 100j, but is not limited thereto. For example, the second ground GND2 may be implemented by an earth ground or a signal ground.

According to an exemplary embodiment, referring to FIG. 2, the inductor Lj may be located in an external space between the battery module 100j and the slave BMS 200j. Specifically, one end of the inductor Lj connected to the contact Nj may be located outside a housing of the slave BMS 200j.

The master BMS 20 may communicate with a superordinate control unit 2 to receive commands and information, and manage and control the slave BMS 200j included in at least one battery pack 10_j according to the received commands. In this case, the superordinate control unit 2 may be a control unit of a superordinate system (e.g., a vehicle, an ESS system, etc.) in which the battery system 1 is mounted.

Referring back to FIG. 1, according to an exemplary embodiment, the master BMS 20 may communicate with each of the plurality of slave BMSs 2001 to 200N in a wireless manner to transmit various control signals or receive battery data. An external device illustrated in FIG. 1 may be a charger in a charging mode for charging the battery 10, or a load (e.g., a motor) in a discharging mode for discharging the battery 10.

The slave BMS 200j according to an exemplary embodiment is capable of wireless communication with the master BMS 20 without including a separate antenna device. This will be described in detail with reference to FIGS. 4 and 5 below.

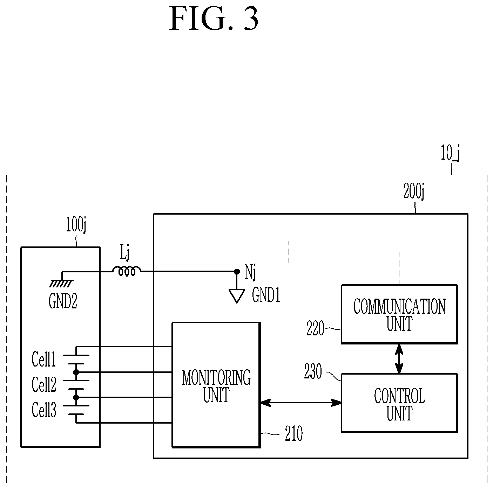

FIG. 3 is a block diagram illustrating the battery pack of FIG. 1 when operating in a monitoring mode in detail. FIG. 4 is a block diagram illustrating the battery pack of FIG. 1 when operating in an antenna mode in detail. FIG. 5 is a block diagram illustrating an antenna of FIG. 4 in detail.

According to an exemplary embodiment, the battery pack 10_j may operate in a monitoring mode for collecting battery data or in an antenna mode for communicating with the outside. Hereinafter, a structure of the battery pack 10_j in the monitoring mode will be described in detail with reference to FIG. 3, and a structure of the battery pack 10_j in the antenna mode will be described in detail with reference to FIGS. 4 and 5.

Referring to FIG. 3, in the monitoring mode, the control unit 230 may control the communication unit 220 to transmit a direct current (DC) signal to the capacitor Cj.

When the DC signal is applied to the capacitor Cj, a circuit as illustrated in FIG. 3 may be formed according to the electrical characteristics of the capacitor Cj that is opened in response to the DC signal. That is, one end of the inductor Lj may be connected to the first ground GND1, and the other end of the inductor Lj may be connected to the second ground GND2. At this time, external noise may be removed by the inductor Lj.

Referring to FIG. 4, in the antenna mode, the control unit 230 may control the communication unit 220 to transfer an AC signal having a predetermined frequency to the capacitor Cj.

When the alternating current (AC) signal is applied to the capacitor Cj, a circuit as illustrated in FIG. 4 may be formed according to the electrical characteristics of the inductor Lj that is opened in response to the AC signal. Specifically, a transmission line (bolded portion) connecting a first terminal connected to the capacitor Cj, a second terminal connected to the first ground GND1, and a third terminal adjacent to the inductor Lj to each other may function as an inverted-F antenna. That is, in the antenna mode for communicating with the outside (e.g., the master BMS), an antenna Aj corresponding to an inverted-F antenna structure may be formed in the slave BMS 200j.

The inverted-F antenna is an antenna made to improve impedance matching of an inverted-L antenna. In this case, the inverted-L antenna may be an antenna made by horizontally bending about 80% of a length of a monopole antenna with respect to the upper side thereof to reduce its height.

Referring to FIG. 4, as an example, the antenna 200_Aj may convert an AC signal input through the communication unit 220 into an electromagnetic wave, and transmit the converted electromagnetic wave into the air. As another example, the antenna Aj may receive an electromagnetic wave, convert the received electromagnetic wave into an AC signal, and transfer the converted AC signal to the communication unit 220.

Referring to FIG. 5, according to an exemplary embodiment, the antenna 200_Aj may resonate at a frequency having a wavelength λ of four times the antenna length AL. Specifically, the inverted-F antenna may be configured to have an antenna length (AL=λ/4) corresponding to 1/4 of a wavelength (λ) of a signal to be transmitted and received. In this case, the antenna length AL may correspond to a length between the inductor Lj and the first ground GND1.

As an example, in order to transmit and receive a signal corresponding to a frequency of 2.45 GHZ, the antenna length AL may be 30.61 mm. As another example, in order to transmit and receive a signal corresponding to a frequency of 915 MHZ, the antenna length AL may be 81.97mm.

According to an exemplary embodiment, the antenna length AL may be determined according to the position (mounting distance) of the inductor Lj. That is, by a simple manipulation of changing the position where the inductor Lj is mounted, the slave BMS 200j can perform wireless communication with the master BMS 20 in various industrial scientific and medical (ISM) frequency bands.

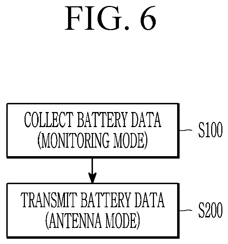

FIG. 6 is a flowchart illustrating a wireless communication method according to an exemplary embodiment.

Hereinafter, a wireless communication method and a battery system providing the same will be described with reference to FIGS. 1 to 6.

Referring to FIG. 6, first, the monitoring unit 210 collects battery data (S100).

The monitoring unit 210 may collect battery data at every predetermined cycle or in real time, and transmit the collected battery data to the control unit 230. In this case, the battery data may include at least one of a cell voltage, a cell current, and a cell temperature for each of the plurality of battery cells Cell1, Cell2, and Cell3. In addition, the battery data may include at least one of a module voltage, which is a voltage at both ends of the battery module 100j, and a module current, which is a current flowing through the battery module 100j.

In step S100, the control unit 230 may control the communication unit 220 to transmit a DC signal to the capacitor Cj. Specifically, in a monitoring mode step in which the monitoring unit 210 collects battery data, when the direct current (DC) signal is applied to the capacitor Cj, a circuit as illustrated in FIG. 3 may be formed according to the electrical characteristics of the capacitor Cj that is opened in response to the DC signal. That is, both ends of the inductor Lj may be connected to the first ground GND1 and the second ground GND2, respectively, such that the inductor Lj is positioned between the first ground GND1 and the second ground GND2. At this time, external noise may be removed by the inductor Lj. Then, the monitoring unit 210 may collect battery data less influenced by external noise.

Next, the control unit 230 transmits the battery data collected through the communication unit 220 to the master BMS 20 (S200).

According to an exemplary embodiment, the control unit 230 may transmit battery data to the BMS 20 through the communication unit 220. According to another exemplary embodiment, the control unit 230 may communicate with the outside in a wireless manner through the communication unit 220 to transmit various types of information or receive a control signal

In this case, the outside may be the master BMS 20, but is not limited thereto, and may include various devices located outside the slave BMS 200j.

In step S200, the control unit 230 may control the communication unit 220 to transmit an AC signal having a predetermined frequency to the capacitor Cj. Specifically, when the alternating current (AC) signal is applied to the capacitor Cj, a circuit as illustrated in FIG. 4 is formed according to the electrical characteristics of the inductor Lj that is opened in response to the AC signal. Specifically, a transmission line (bolded portion) connecting a first terminal connected to the capacitor Cj, a second terminal connected to the first ground GND1, and a third terminal adjacent to the inductor Lj to each other may function as an inverted-F antenna. That is, in an antenna mode step for communicating with the outside, an antenna 200_Aj corresponding to an inverted-F antenna structure may be formed in the slave BMS 200j.

The inverted-F antenna is an antenna made to improve impedance matching of an inverted-L antenna. In this case, the inverted-L antenna may be an antenna made by horizontally bending about 80% of a length of a monopole antenna with respect to the upper side thereof to reduce its height.

Referring to FIG. 4, as an example, the antenna 200_Aj may convert an AC signal input through the communication unit 220 into an electromagnetic wave, and transmit the converted electromagnetic wave into the air. As another example, the antenna Aj may receive an electromagnetic wave, convert the received electromagnetic wave into an AC signal, and transfer the converted AC signal to the communication unit 220.

Referring back to FIG. 5, according to an exemplary embodiment, the antenna 200_Aj may resonate at a frequency having a wavelength λ of four times the antenna length AL. Specifically, the inverted-F antenna may be configured to have an antenna length (AL=λ/4) corresponding to 1/4 of a wavelength (λ) of a signal to be transmitted and received. In this case, the antenna length AL may correspond to a length between the inductor Lj and the first ground GND1.

As an example, in order to transmit and receive a signal corresponding to a frequency of 2.45 GHZ, the antenna length AL may be 30.61 mm. As another example, in order to transmit and receive a signal corresponding to a frequency of 915 MHZ, the antenna length AL may be 81.97mm.

According to an exemplary embodiment, the antenna length AL may be determined according to the position (mounting distance) of the inductor Lj. That is, by a simple manipulation of changing the position where the inductor Lj is mounted, the slave BMS 200j can perform wireless communication with the master BMS 20 in various industrial scientific and medical (ISM) frequency bands.

Although the exemplary embodiments of the present disclosure have been described in detail above, the scope of the present disclosure is not limited thereto. Various modifications and improvements made by those skilled in the art also fall within the scope of the present disclosure.

## Claims

1. A battery system (1) including at least one battery pack (10_1 - 10_n) including a battery module (100j) and a slave battery management system, BMS, (200j) managing the battery module, the battery system comprising:
a communication unit (220) of the slave BMS;
**characterized by**
a capacitor (Cj) connected between the communication unit and a first ground;
an inductor (Lj) connected between a contact between the first ground and the capacitor and a second ground; and
a controller (230) configured to transmit an AC signal having a predetermined frequency to the communication unit in an antenna mode, wherein in the antenna mode, the slave BMS is configured to communicate with the outside.

2. The battery system of claim 1, wherein
the inductor is located between the battery module and the slave BMS.

3. The battery system of claim 2, wherein
a length between the inductor and the first ground corresponds to 1/4 of a wavelength of the AC signal.

4. The battery system of claim 3, wherein
the first ground is a signal ground of the slave BMS, and
the second ground is a chassis ground of the battery module.

5. The battery system of claim 1, further comprising:
a monitoring unit electrically connected to each of a plurality of battery cells included in the battery module to collect battery data including at least one of a current, a voltage, and a temperature for each of the plurality of battery cells.

6. The battery system of claim 5, wherein
in a monitoring mode in which the monitoring unit is configured to collect the battery data, the control unit is configured to transmit a DC signal to the communication unit.

7. The battery system of claim 6, further comprising:
a master BMS communicating with the communication unit in a wireless manner to manage the at least one slave BMS.

8. The battery system of claim 7, wherein
in the antenna mode, the controller is further configured to transmit the collected battery data to the master BMS through the communication unit.

9. A wireless communication method in a battery system (1) including a communication unit (220) of a slave battery management system, BMS, managing a battery module (100j), a capacitor (Cj) connected between the communication unit and a first ground, and an inductor (Lj) connected between a contact between the first ground and the capacitor and a second ground, the wireless communication method comprising:
transmitting an AC signal having a predetermined frequency to the communication unit to configure the slave BMS to communicate with the outside.

10. The wireless communication method of claim 9, wherein
the inductor is located between the battery module and the slave BMS.

11. The wireless communication method of claim 10, wherein
a length between the inductor and the first ground corresponds to 1/4 of a wavelength of the AC signal.

12. The wireless communication method of claim 11, wherein
the first ground is a signal ground of the slave BMS, and
the second ground is a chassis ground of the battery module.

13. The wireless communication method of claim 9, wherein
the battery system further includes a monitoring unit electrically connected to each of a plurality of battery cells included in the battery module to collect battery data including at least one of a current, a voltage, and a temperature for each of the plurality of battery cells.

14. The wireless communication method of claim 13, further comprising:
collecting the battery data by the monitoring unit, before the communication with the outside.
wherein the collection of the battery data includes transmitting a DC signal to the communication unit.

15. The wireless communication method of claim 14, wherein
the communication with the outside includes transmitting the collected battery data to a master BMS managing the slave BMS through the communication unit.

## Patentansprüche

1. Batteriesystem (1), umfassend wenigstens einen Batteriepack (10_1 - 10_n), welcher ein Batteriemodul (100j) und ein Slave-Batterie-Verwaltungssystem, BMS, (200j) umfasst, welches das Batteriemodul verwaltet, wobei das Batteriesystem umfasst:
eine Kommunikationseinheit (220) des Slave-BMS;
**gekennzeichnet durch,**
einen Kondensator (Cj), welcher zwischen die Kommunikationseinheit und eine erste Erdung geschaltet ist;
einen Induktor (Lj), welcher zwischen einen Kontakt zwischen der ersten Erdung und dem Kondensator und eine zweite Erdung geschaltet ist; und
eine Steuereinheit (230), welche dazu eingerichtet ist, ein AC-Signal, welches eine vorbestimmte Frequenz aufweist, in einem Antennenmodus an die Kommunikationseinheit zu übertragen, wobei das Slave-BMS in dem Antennenmodus dazu eingerichtet ist, mit der Außenseite zu kommunizieren.

2. Batteriesystem nach Anspruch 1, wobei
der Induktor zwischen dem Batteriemodul und dem Slave-BMS angeordnet ist.

3. Batteriesystem nach Anspruch 2, wobei
eine Länge zwischen dem Induktor und der ersten Erdung 1/4 einer Wellenlänge des AC-Signals entspricht.

4. Batteriesystem nach Anspruch 3, wobei
die erste Erdung eine Signalerdung des Slave-BMS ist, und
die zweite Erdung eine Chassiserdung des Batteriemoduls ist.

5. Batteriesystem nach Anspruch 1, ferner umfassend:
eine Überwachungseinheit, welche elektrisch mit jeder aus einer Mehrzahl von Batteriezellen verbunden ist, welche in dem Batteriemodul umfasst sind, um Batteriedaten zu sammeln, welche wenigstens eines aus einem Strom, einer Spannung und einer Temperatur für jede aus der Mehrzahl von Batteriezellen umfassen.

6. Batteriesystem nach Anspruch 5, wobei
in einem Überwachungsmodus, in welchem die Überwachungseinheit dazu eingerichtet ist, die Batteriedaten zu sammeln,
die Steuereinheit dazu eingerichtet ist, ein DC-Signal an die Kommunikationseinheit zu übertragen.

7. Batteriesystem nach Anspruch 6, ferner umfassend:
ein Master-BMS, welches mit der Kommunikationseinheit auf eine drahtlose Weise kommuniziert, um das wenigstens eine Slave-BMS zu verwalten.

8. Batteriesystem nach Anspruch 7, wobei
in dem Antennenmodus, die Steuereinheit ferner dazu eingerichtet ist, die gesammelten Batteriedaten mittels der Kommunikationseinheit an das Master-BMS zu übertragen.

9. Drahtloses Kommunikationsverfahren in einem Batteriesystem (1), welches eine Kommunikationseinheit (220) eines Slave-Batterie-Verwaltungssystems, BMS, welches ein Batteriemodul (100) verwaltet, einen Kondensator (Cj), welcher zwischen die Kommunikationseinheit und eine erste Erdung geschaltet ist, und einen Induktor (Lj) umfasst, welcher zwischen einen Kontakt zwischen der ersten Erdung und dem Kondensator und eine zweite Erdung geschaltet ist, wobei das drahtlose Kommunikationsverfahren umfasst:
Übertragen eines AC-Signals, welches eine vorbestimmte Frequenz, aufweist, an die Kommunikationseinheit, um das Slave-BMS dazu einzurichten, mit der Außenseite zu kommunizieren.

10. Drahtloses Kommunikationsverfahren nach Anspruch 9, wobei
der Induktor zwischen dem Batteriemodul und dem Slave-BMS angeordnet ist.

11. Drahtloses Kommunikationsverfahren nach Anspruch 10, wobei
eine Länge zwischen dem Induktor und der ersten Erdung 1/4 einer Wellenlänge des AC-Signals entspricht.

12. Drahtloses Kommunikationsverfahren nach Anspruch 11, wobei die erste Erdung eine Signalerdung des Slave-BMS ist, und
die zweite Erdung eine Chassiserdung des Batteriemoduls ist.

13. Drahtloses Kommunikationsverfahren nach Anspruch 9, wobei
das Batteriesystem ferner eine Überwachungseinheit umfasst, welche elektrisch mit jeder aus einer Mehrzahl von Batteriezellen verbunden ist, welche in dem Batteriemodul umfasst sind, um Batteriedaten zu sammeln, welche wenigstens eines aus einem Strom, einer Spannung und einer Temperatur für jede aus der Mehrzahl von Batteriezellen umfassen.

14. Drahtloses Kommunikationsverfahren nach Anspruch 13, ferner umfassend:
Sammeln der Batteriedaten durch die Überwachungseinheit, vor der Kommunikation mit der Außenseite,
wobei das Sammeln der Batteriedaten ein Übertragen eines DC-Signals an die Kommunikationseinheit umfasst.

15. Drahtloses Kommunikationsverfahren nach Anspruch 14, wobei
das Kommunizieren mit der Außenseite ein Übertragen der gesammelten Batteriedaten an ein Master-BMS, welches das Slave-BMS verwaltet, mittels der Kommunikationseinheit umfasst.

## Revendications

1. Système de batterie (1) comportant au moins un bloc-batterie (10_1 - 10_n) comportant un module de batterie (100j) et un système de gestion de batterie, BMS, esclave, (200j) gérant le module de batterie, le système de batterie comprenant :
une unité de communication (220) du BMS esclave ;
**caractérisé par**
un condensateur (Cj) connecté entre l'unité de communication et une première masse ; un inducteur (Lj) connecté entre un contact entre la première masse et le condensateur et une seconde masse ; et
un dispositif de commande (230) configuré pour transmettre un signal CA ayant une fréquence prédéterminée à l'unité de communication dans un mode d'antenne, dans lequel, dans le mode d'antenne, le BMS esclave est configuré pour communiquer avec l'extérieur.

2. Système de batterie selon la revendication 1, dans lequel
l'inducteur est situé entre le module de batterie et le BMS esclave.

3. Système de batterie selon la revendication 2, dans lequel
une longueur entre l'inducteur et la première masse correspond à 1/4 d'une longueur d'onde du signal CA.

4. Système de batterie selon la revendication 3, dans lequel
la première masse est une masse de signal du BMS esclave, et
la deuxième masse est une masse de châssis du module de batterie.

5. Système de batterie selon la revendication 1, comprenant en outre :
une unité de surveillance connectée électriquement à chacun d'une pluralité d'éléments de batterie inclus dans le module de batterie pour collecter des données de batterie incluant au moins un parmi un courant, une tension et une température pour chacun de la pluralité d'éléments de batterie.

6. Système de batterie selon la revendication 5, dans lequel
dans un mode de surveillance dans lequel l'unité de surveillance est configurée pour collecter les données de batterie, l'unité de commande est configurée pour transmettre un signal CC à l'unité de communication.

7. Système de batterie selon la revendication 6, comprenant en outre :
un BMS maître communiquant avec l'unité de communication de manière sans fil pour gérer l'au moins un BMS esclave.

8. Système de batterie selon la revendication 7, dans lequel
dans le mode antenne, le dispositif de commande est en outre configuré pour transmettre les données de batterie collectées au BMS maître par l'intermédiaire de l'unité de communication.

9. Procédé de communication sans fil dans un système de batterie (1) comportant une unité de communication (220) d'un système de gestion de batterie, BMS, esclave, gérant un module de batterie (100j), un condensateur (Cj) connecté entre l'unité de communication et une première masse, et un inducteur (Lj) connecté entre un contact entre la première masse et le condensateur et une deuxième masse, le procédé de communication sans fil comprenant :
la transmission d'un signal CA ayant une fréquence prédéterminée à l'unité de communication pour configurer le BMS esclave pour communiquer avec l'extérieur.

10. Procédé de communication sans fil selon la revendication 9, dans lequel
l'inducteur est situé entre le module de batterie et le BMS esclave.

11. Procédé de communication sans fil selon la revendication 10, dans lequel
une longueur entre l'inducteur et la première masse correspond à 1/4 d'une longueur d'onde du signal CA.

12. Procédé de communication sans fil selon la revendication 11, dans lequel
la première masse est une masse de signal du BMS esclave, et
la deuxième masse est une masse de châssis du module de batterie.

13. Procédé de communication sans fil selon la revendication 9, dans lequel
le système de batterie comporte en outre une unité de surveillance connectée électriquement à chacun d'une pluralité d'éléments de batterie inclus dans le module de batterie pour collecter des données de batterie incluant au moins un parmi un courant, une tension et une température pour chacun de la pluralité d'éléments de batterie.

14. Procédé de communication sans fil selon la revendication 13, comprenant en outre :
la collecte des données de la batterie par l'unité de surveillance, avant la communication avec l'extérieur.
dans lequel la collecte des données de batterie comporte la transmission d'un signal CC à l'unité de communication.

15. Procédé de communication sans fil selon la revendication 14, dans lequel
la communication avec l'extérieur comporte la transmission des données de batterie collectées à un BMS maître gérant le BMS esclave par l'intermédiaire de l'unité de communication.
